# EUROPEAN PATENT APPLICATION

(11) **EP 1 564 631 A1**
(43) Date of publication of application: **17.08.2005**
(21) Application number: 02808098.4
(22) Date of filing: 05.11.2002
(51) Int. Cl.: G06F 3/00, G06T 11/80

(54) **DISPLAY CONTROL DEVICE, DISPLAY CONTROL PROGRAM, AND DISPLAY CONTROL METHOD**

(71) Applicant: FUJITSU LIMITED, Kawasaki-shi, Kanagawa 211-8588 (JP)
(72) Inventor: OBITSU, Toshiro, Kawasaki-shi, Kanagawa 211-8588 (JP); HIGUCHI, Hisamichi, Kawasaki-shi, Kanagawa 211-8588 (JP)
(74) Representative: Kreutzer, Ulrich, Dipl.-Phys.
(86) International application number: PCT/JP2002/011519
(87) International publication number: WO 2004/042547

(57) **Abstract**

A display control device is provided that controls a display device that displays a screen area wider than the width of the screen display area. The display control device includes a non-display area in the surrounding part of the screen display area, that receives pen input by means of a pen input device, but does not display the screen, a screen edge detecting unit that detects the touching of the non-display area by the pen input device, a movement determining unit that determines to start scrolling the display screen in a specific direction as well as to stop the scrolling based on the contact location in the non-display area, the direction of movement, and the amount of movement of the pen input device, and a display screen shift instruction unit that instructs the display device to start scrolling the display screen in a specific direction, as well as to stop scrolling the display screen.

## Description

### TITLE OF THE INVENTION

Display control device, display control program, and display control method

### TECHNICAL FIELD

The present invention relates to a display control device, a display control program, and a display control method that controls a display device that displays a screen area wider than the width of the screen display area. More particularly, the present invention relates to a display control device, a display control program, and a display control method that allows the displayed screen to change by a simple operation even when a pen input device is used as the input device, and yet maintain the screen clarity.

### BACKGROUND ART

Conventionally, a pen input device is generally used as an input device of a portable information terminal. Unlike a keyboard or a mouse, the pen input device is simple to operate and is portable and is best suited for the portable information terminal. In recent years, the pen input device is also used as the input device for tablet type personal computers with emphasis on simplicity of operations and portability.

However, when a screen area wider than the width of the screen display area is to be displayed in a display device, it is relatively more difficult to instruct the screen to shift by the pen input device as compared to a mouse.

For example, according to a technology disclosed in Japanese Patent Laid-Open Publication No. H6-348251, when the cursor location of the mouse moves to the edge of the display area, the display screen automatically shifts to bring the cursor location near the center of the display screen. According to a technology disclosed in Japanese Patent Laid-Open Publication No. H11-015630, when the cursor location of the mouse is outside the display area of a display device, the display screen scrolls to bring the cursor location in the display area. Thus, when a mouse is used, the cursor location of the mouse is determined, and the display screen shifts based on the cursor location information.

However, the location of the pen input device cannot be determined unless the pen input devices touches the display screen. Moreover, since touching the display screen with the pen input device is considered as an instruction for the computer, it cannot function as an instruction for the display screen to scroll.

Thus, a scroll bar or a scroll button needs to be included in the display area to scroll the display screen by means of the pen input device, thereby causing loss of space in the display area, as well as affecting the clarity.

Since the scroll bar or scroll buttons are implemented by means of software, the display screen cannot be scrolled for applications not compatible with the software, or when the scroll bar or the scroll buttons themselves are outside the display area of the display device even in a compatible software.

### DISCLOSURE OF THE INVENTION

Thus, it is an object of the present invention to provide a display control device, a display control program, and a display control method that allow the displayed screen to change by a simple operation even when a pen input device is used as the input device, and yet maintain the screen clarity.

To solve the above problems and achieve the above object, a display control device according to an aspect controls a display device capable of displaying a screen area wider than a screen display area and includes an identifying unit that detects an input in an input receiving area provided near the screen display area; and a display shift instruction unit that instructs the display device to change the display in the screen display area based on a result of detection by the identifying unit.

Moreover, according to another aspect, a computer program causes a computer to controls a display device capable of displaying a screen area wider than a screen display area, and causes the computer to execute detecting an input in an input receiving area provided near the screen display area; and instructing the display device to change the display in the screen display area based on a result of detection at the detecting.

Furthermore, according to still another aspect, a display control method controls a display device capable of displaying a screen area wider than a screen display area and includes detecting an input in an input receiving area provided near the screen display area; and instructing the display device to change the display in the screen display area based on a result of detection at the detecting.

According to the above aspects, an input is detected in the input receiving area provided around the screen display area, and the display device is instructed to shift the screen that is displayed in the screen display area based on the input detection. Thus, the screen that is displayed can be shifted using a simple operation even if a pen input device is used as the input device, and yet the screen clarity is maintained.

### BRIEF DESCRIPTION OF THE DRAWINGS

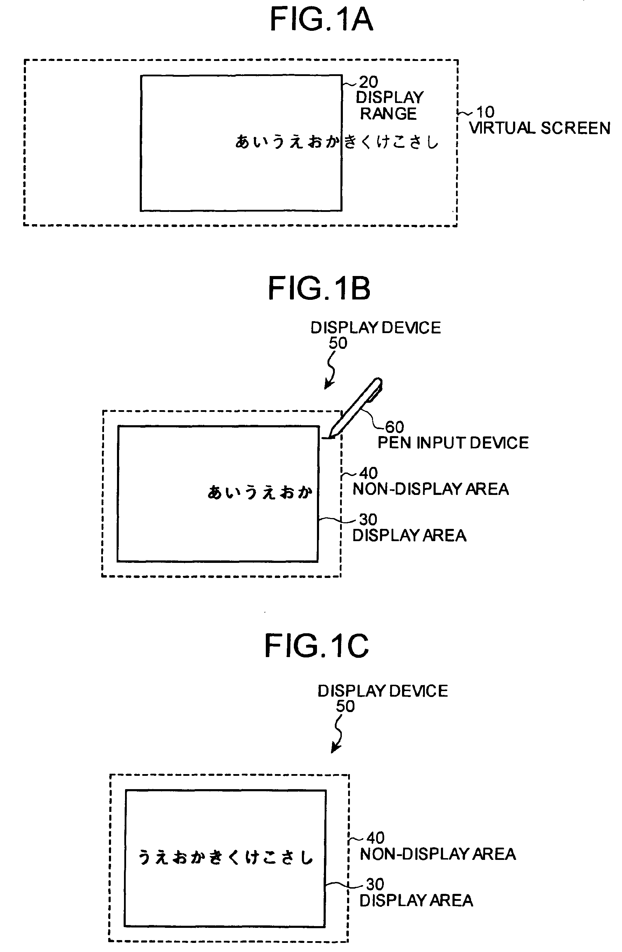

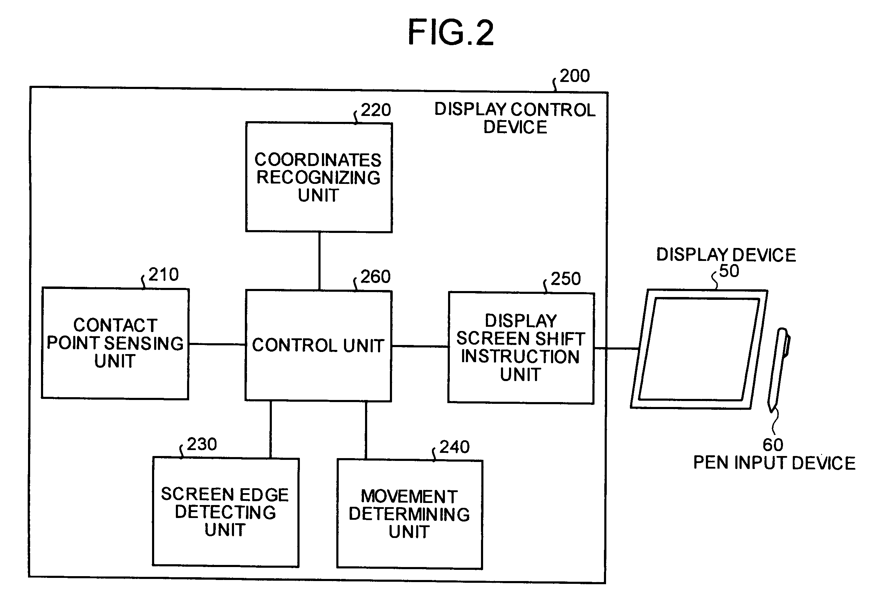

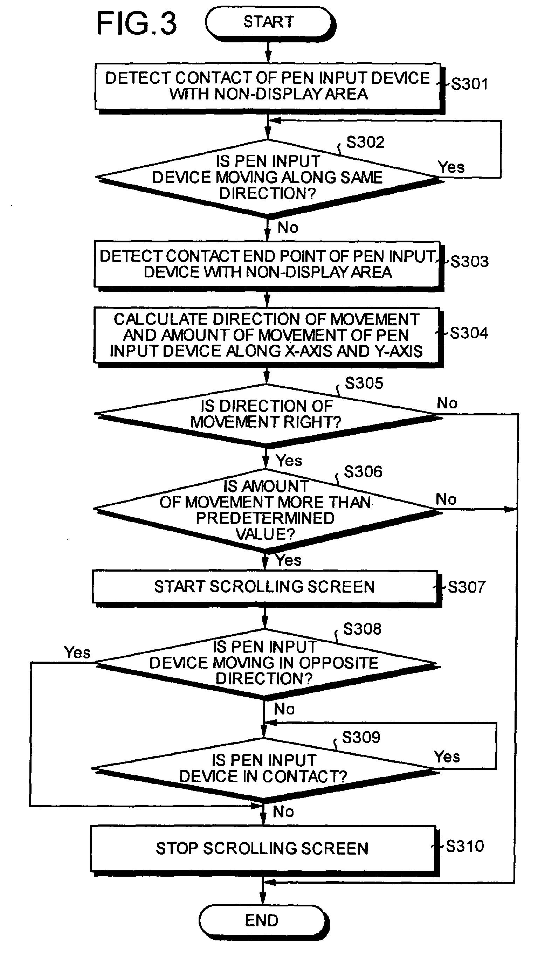

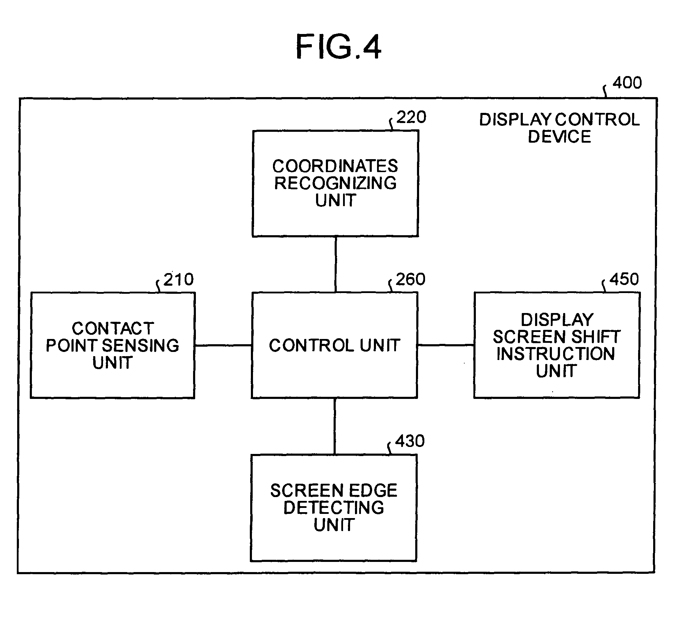

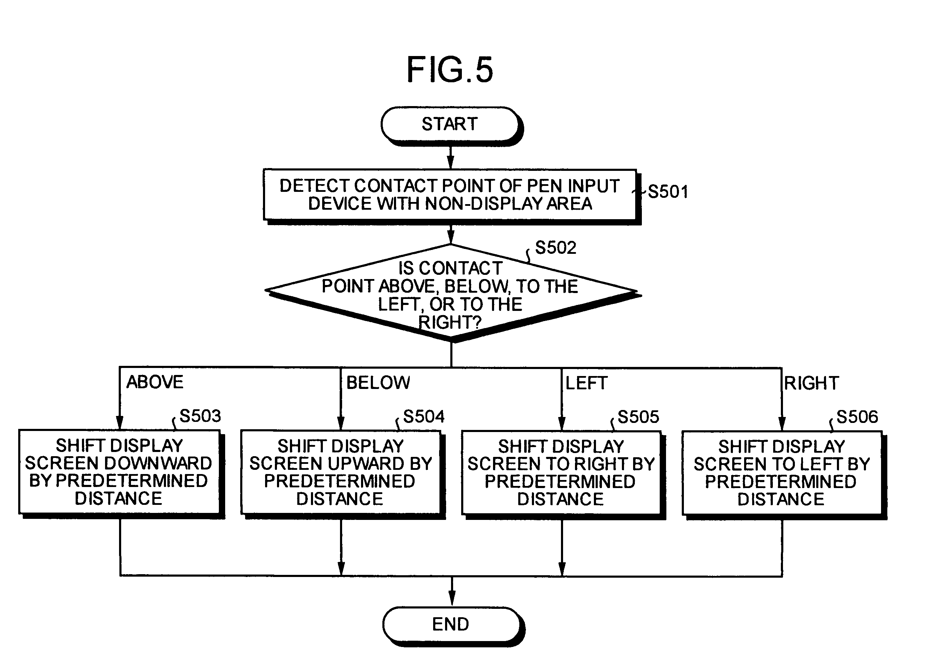

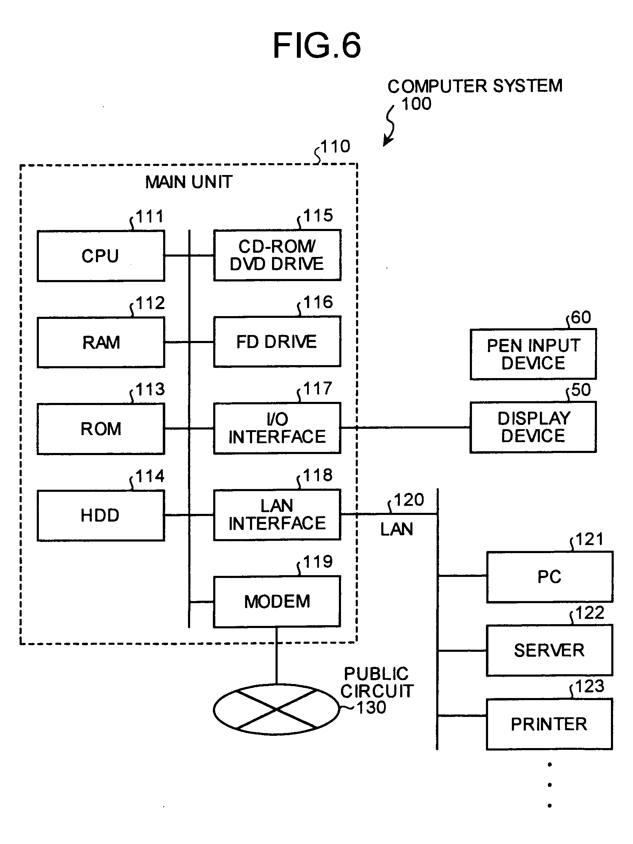

Fig. 1A, Fig. 1B, and Fig. 1C are drawings illustrating a concept of a scrolling operation of a display screen according to a first embodiment of the present invention; Fig. 2 is a functional block diagram of a display control device according to the first embodiment; Fig. 3 is a flowchart of a process of the display control device according to the first embodiment; Fig. 4 is a functional block diagram of a display control device according to a second embodiment of the present invention; Fig. 5 is a flowchart of a process of the display control device according to the second embodiment; and Fig. 6 is a drawing of a computer system that executes a control program according to the first and second embodiments.

### BEST MODE FOR CARRYING OUT THE INVENTION

Exemplary embodiments of the display control device, the display control program, and the display control method according to the present invention are explained next with reference to the accompanying drawings.

### First embodiment

A concept of a scrolling operation of a display screen according to a first embodiment is explained first. Fig. 1 is a drawing of the concept of the scrolling operation of the display screen according to the first embodiment.
Fig. 1A is a drawing of a virtual screen 10 which is a display screen larger than the size of the screen display area of a display device, and a display range 20 of the virtual screen 10 that is displayed on the display device.
Fig. 1B is a drawing of the display range 20 showing a part of the virtual screen 10 being displayed in a display area 30 of a display device 50. Further, a non-display area 40 around the display area 30 receives a pen input from a pen input device 60 in the same manner as in the display area 30, and represents an area that does not come into view.

As shown in Fig. 1B, when a user drags the pen input device 60 from left to right on the right side of the non-display area 40, the display screen scrolls to the left as shown in Fig. 1C. Similarly, when the pen input device 60 is dragged from right to left on the left side of the non-display area 40, the display screen scrolls to the right, when dragged from bottom to top above the non-display area 40, the display screen scrolls downward, and when dragged from top to bottom below the non-display area 40 the display screen scrolls upward.

Thus, in the first embodiment, in addition to the display area 30, the display device 50 includes a pen input receiving area surrounding the display area 30, the margin between the pen input receiving area and the display area 30 comprising the non-display area 40, and the display screen is made to scroll by means of the pen input device 60 by dragging it in the non-display area 40 based on where the line is drawn as well as the direction in which the line is drawn, thereby enabling the scrolling of the screen by means of the pen input device 60.

A configuration of a display control device according to the first embodiment is explained next. Fig. 2 is a functional block diagram of the display control device according to the first embodiment. As shown in Fig. 2, a display control device 200 includes a contact point sensing unit 210, a coordinates recognizing unit 220, a screen edge detecting unit 230, a movement determining unit 240, a display screen shift instruction unit 250, and a control unit 260.

The contact point sensing unit 210 detects when the pen input device 60 comes in contact with the pen input receiving area, that is, either the display area 30 or the non-display area 40 surrounding the display area 30. Usually, the pen input receiving area is covered by a resistor film or an electromagnetic inductor in the form of a thin film. The contact of the pen input device 60 is detected from the change in the resistance of the resistor film or the change in the capacitance of the electromagnetic inductor.

The coordinates recognizing unit 220 recognizes the coordinates of the contact point detected by the contact point sensing unit 210 when the pen input device 60 touches the pen input receiving area. Further, the coordinates are recognized by means of a coordinate system in which the top left corner is taken as the origin (0,0) of the coordinates, with X-axis along the right and Y-axis downwards.

The screen edge detecting unit 230 detects whether the contact point is in the non-display area 40 based on the coordinates of the contact point recognized by the coordinates recognizing unit 220 when the pen input device 60 touches the pen input receiving area. The detection by the screen edge detecting unit 230 of the contact point in the non-display area 40 when the pen input device 60 touches the pen input receiving area starts the display screen control of the display control device 200.

The movement determining unit 240 calculates the direction of movement and the amount of movement of the pen input device 60 with the aid of the track from the contact start point of the pen input device 60 in the non-display area 40 detected by the screen edge detecting unit 230, and determines whether to start the scrolling of the display screen based on the calculated direction of the movement, the amount of the movement as well as the contact location of the pen input device.

To be specific, the movement determining unit 240 calculates the direction of movement and the amount of movement in the direction of the X-axis as well as the Y-axis of the pen input device 60 from the coordinates of the contact start point and the contact end point of the pen input device 60. If the calculated amount of movement is more than a predetermined value, and if the combination of the direction of movement and the contact location of the pen input device 60 is right, the movement determining unit 240 determines to start the scrolling of the display screen in the direction of movement of the pen input device 60.

The combination of the contact location and the direction of movement of the pen input device 60 is right if the contact location is the non-display area 40 to the right of the display area 30 and the direction of movement is from left to right. Similarly, the combination is right if the contact location is the non-display area 40 to the left of the display area 30 and the direction of movement is from right to left. The combination is right if the contact location is the non-display area 40 above the display area 30 and the direction of movement is from bottom to top. Similarly, the combination is right if the contact location is the non-display area 40 below the display area 30 and the direction of movement is from top to bottom. There is no need to determine whether the combination of the contact location and the direction of movement is right.

If the contact location of the pen input device 60 is the non-display area 40 to the right of the display area 30, the display screen scrolls to the left. If the contact location is the non-display area 40 to the left of the display area 30, the display screen scrolls to the right. If the contact location is the non-display area 40 above the display area 30, the display screen scrolls downward, and if the contact location is the non-display area 40 below the display area 30, the display screen scrolls upward.

The contact end point of the pen input device 60 is that point where the pen input device 60 stops moving. The movement determining unit 240 determines that the scrolling of the display screen should be stopped either when the pen input device 60 starts moving in the opposite direction or is removed from the non-display area 40.

Thus, the movement determining unit 240 determines to start or stop the scrolling of the display screen based on which part of the non-display area 40 is touched by the pen input device 60, the direction of movement of the pen input device 60, and the amount of movement of the pen input device 60. Consequently, the display screen can be scrolled by operating the pen input device 60.

The display screen shift instruction unit 250 gives instructions to the display device 50 to start scrolling or stop scrolling the display screen in a specified direction based on what the movement determining unit 240 determines.

The control unit 260 controls the entire display control device 200. To be specific, the control unit 260 makes the display control device 200 function as one device by shifting control and enabling data exchange between the rest of the functional units.

A display control process of the display control device 200 according to the first embodiment is explained next. Fig. 3 is a flowchart of the display control process of the display control device 200 according to the first embodiment.

As shown in Fig. 3, the screen edge detecting unit 230 detects the contact of the pen input device 60 with the non-display area 40, thereby causing the display control device 200 to start the display control process (step S301). The screen edge detecting unit 230 senses the movement of the pen input device 60 when the pen input device 60 is moving along the same direction (step S302).

The movement determining unit 240 detects the contact end point of the pen input device 60 (step S303), calculates the direction of movement, and the amount of movement of the pen input device 60 along X-axis and along Y-axis (step S304), and determines whether the combination of the contact location in the non-display area 40 and the direction of movement of the pen input device 60 is right (step S305). If the combination of the contact location in the non-display area 40 and the direction of movement of the pen input device 60 is not right, the display control process ends there.

If the combination of the contact location in the non-display area 40 and the direction of movement of the pen input device 60 is right, the movement determining unit 240 determines whether the amount of movement of the pen input device 60 is more than a predetermined value (step S306). If the amount of movement of the pen input device 60 is not more than the predetermined value, the display control process ends there. If the amount of movement of the pen input device 60 is more than the predetermined value, the movement determining unit 240 instructs the display device 50 to start scrolling the display screen via the display screen shift instruction unit 250 (step S307).

The movement determining unit 240 determines whether the pen input device 60 has moved in the opposite direction (step S308), and if the pen input device 60 has not moved in the opposite direction, further determines whether the pen input device 60 is in contact with the non-display area 40 (step S309). If the pen input device 60 is in contact with the non-display area 40, the movement determining unit 240 determines that the pen input device 60 is in contact with the non-display area 40.

If the pen input device 60 has moved in the opposite direction, or if the pen input device 60 is lifted from the non-display area 40, the movement determining unit 240 instructs the display device 50 to stop scrolling the display screen via the display screen shift instruction unit 250, thereby ending the display control process (step S310).

In the first embodiment, the screen edge detecting unit 230 detects when the pen input device 60 touches the non-display area 40, the movement determining unit 240 determines to start or stop the scrolling of the display screen in the specific direction based on the contact location of the pen input device 60 in the non-display area 40, the direction of movement of the pen input device 60, and the amount of movement of the pen input device 60. The display screen shift instruction unit 250 instructs the display device 50 to start or stop the scrolling of the display screen in the specific direction. Thus, the display screen can be easily scrolled by means of the pen input device 60.

In the first embodiment, the non-display area 40 entirely surrounds the display area 30, and the scrolling direction of the display screen is determined based on the location and the direction in which the pen input device 60 is dragged in the non-display area 40.
However, the present invention can be similarly applied in such a way that the non-display area 40 only partially surrounds the display area 30. For example, the non-display area 40 may be provided to the right of the display area 30, and the scrolling direction of the display screen is determined based only on the direction in which the pen input device 60 is dragged in the non-display area.

### Second embodiment

The scrolling of the display screen by dragging the pen input device 60 in the non-display area 40 is explained in the first embodiment. However, operations other than dragging the pen input device 60 in the display area can be used to give instructions to the display control device for shifting the display screen. The display control device that shifts the display screen when the pen input device 60 merely touches the non-display area is explained in a second embodiment.

A configuration of the display control device according to the second embodiment is explained first. Fig. 4 is a functional block diagram of the display control device according to the second embodiment. For the sake of convenience, the parts that are the same as or equivalent to the parts in Fig. 2 are assigned the same reference numerals, and are not explained in detail.

As shown in Fig. 4, a display control device 400 includes the contact point sensing unit 210, the coordinates recognizing unit 220, a screen edge detecting unit 430, a display screen shift instruction unit 450, and the control unit 260.

The screen edge detecting unit 430 determines the contact location when the pen input device 60 touches the non-display area 40, and determines the scrolling direction of the display screen of the display device 50 based on the contact location. To be specific, the screen edge detecting unit 430 determines whether the contact location of the pen input device 60 is to the left, to the right, to the top, or to the bottom of the display area 30. If the contact location is to the right of the display area 30, the screen edge detecting unit 430 determines that the display screen should be shifted to the left by a predetermined distance. If the contact location is to the left of the display area 30, the screen edge detecting unit 430 determines that the display screen should be shifted to the right by a predetermined distance. If the contact location is above the display area 30, the screen edge detecting unit 430 determines that the display screen should be shifted downward by a predetermined distance, and if the contact location is below the display area 30, the screen edge detecting unit 430 determines that the display screen should be shifted upward by a predetermined distance.

Thus, the screen edge detecting unit 430 determines the contact location of the pen input device 60 in the non-display area 40, and determines the direction in which the display screen is to be shifted by a predetermined distance based on the contact location. Consequently, the display screen can be easily shifted by means of the pen input device 60.

The display screen shift instruction unit 450 gives instructions to the display device 50 pertaining to the direction of shift and the amount of shift of the display screen based on what the screen edge detecting unit 430 determines. However, the display screen shift instruction unit 450 does not instruct the display device 50 to scroll the display screen, but to display the screen that is moved by a predetermined distance.

A display control process of the display control device 400 is explained next. Fig. 5 is a flowchart of the display control process of the display control device 400 according to the second embodiment.

As shown in Fig. 5, when the screen edge detecting unit 430 detects the contact of the pen input device 60 with the non-display area 40 (step S501), the display control device 400 determines whether the detected contact point is to the left, right, above, or below of the display area 30 (step S502), and determines the direction of shift of the display screen.

If the contact point is above the display area 30, the display screen shift instruction unit 450 instructs the display device 50 to shift the display screen downward by a predetermined distance (step S503). If the contact point is below the display area 30, the display screen shift instruction unit 450 instructs the display device 50 to shift the display screen upward by a predetermined distance (step S504). If the contact point is to the left of the display area 30, the display screen shift instruction unit 450 instructs the display device 50 to shift the display screen to the right by a predetermined distance (step S505). If the contact point is to the right of the display area 30, the display screen shift instruction unit 450 instructs the display device 50 to shift the display screen to the left by a predetermined distance (step S506), thereby ending the process.

Thus, in the second embodiment, the screen edge detecting unit 430 determines the direction of shift of the display screen based on the contact location of the pen input device in the non-display area 40, and the display screen shift instruction unit 450 instructs the display device 50 to shift the display screen by a predetermined distance in the determined direction. Consequently, the display screen can be easily shifted by means of the pen input device 60.

Displaying a part of the virtual screen 10 by dragging the pen input device 60 in the non-display area or touching the non-display area with the pen input device 60 is explained in the first embodiment and the second embodiment. However, the present invention can be similarly applied in such a way that when a specific symbol or shape is drawn in the non-display area by means of the pen input device 60 toggles the display screen between full view of the virtual screen 10 with reduced display quality and a partial view of the virtual screen 10 with uncompromised display quality.

The display control device was explained in the first embodiment and the second embodiment. However, the configuration of the display control device can be provided in software form and a display control program that includes similar functions can be formulated. A computer system that executes the display control program is explained next.

Fig. 6 is a drawing of a computer system that executes the display control program according to the first and second embodiments. As shown in Fig. 6, a computer system 100 includes a main unit 110, the display device 50 that displays a display screen according to instructions from the main unit 110, and the pen input device 60 that inputs various types of information into the computer system 100. The display area of the display device 50 and the area around the display area are covered with a resistor film that receives the input from the pen input device 60.

The main unit 110 includes a Central Processing Unit (CPU) 111, a Random Access Memory (RAM) 112, a Read Only Memory (ROM) 113, a Hard Disk Drive (HDD) 114, a Compact Disk-Read Only Memory/Digital Versatile Disk (CD-ROM/DVD) drive 115, a Floppy Disk (FD) drive 116, an Input/Output (I/O) interface 117, a Local Area Network (LAN) interface 118, and a modem 119. The computer system 100 is connected to another computer system (such as a personal computer) 121, a server 122, and a printer 123 etc. via a LAN 120 connected to the LAN interface 118, and to a public circuit 130 via the modem 119.

The display control program executed by the computer system 100 is stored in portable storage media such as floppy disk, CD-ROM, DVD disk, magneto optic disk, IC card etc., or the database of the server 122 connected to the computer system 100 via the LAN interface 118, or the database of the computer system 121, or the data base of other computer system connected to the computer system 100 via the public circuit 130. The main unit 110 reads the display control program stored these storage media and databases, and installs the display control program in the computer system 100. The installed display control program is stored in the HDD 114 and executed by the CPU 111 by means of the RAM 112, the ROM 113 etc.

According to the present invention, an input is detected in the input receiving area provided around the screen display area, and the display device is instructed to shift the screen that is displayed in the screen display area based on the input detection. Thus, the screen that is displayed can be shifted using a simple operation even if a pen input device is used as the input device, and yet the screen clarity is maintained.

### INDUSTRIAL APPLICABILITY

The display control device, the display control program, and the display control method according to the present invention is useful in tablet type personal computers with emphasis on simplicity of operation and portability.

## Claims

1. A display control device that controls a display device capable of displaying a screen area wider than a screen display area, comprising:
an identifying unit that detects an input in an input receiving area provided near the screen display area; and
a display shift instruction unit that instructs the display device to change the display in the screen display area based on a result of detection by the identifying unit.

2. The display control device according to claim 1, wherein the input receiving area is provided around the screen display area.

3. The display control device according to claim 1 or 2, wherein the identifying unit identifies a shape drawn in the input receiving area, and the display shift instruction unit instructs the display device to change the display in the screen display area based on the shape identified by the identifying unit.

4. The display control device according to claim 3, wherein the identifying unit identifies as a line any line drawn from left to right, or from right to left, or from bottom to top, or from top to bottom, and the display shift instruction unit instructs the display device to shift the display screen towards left if the line is drawn from left to right, towards right if the line is drawn from right to left, downward if the line is drawn from bottom to top, and upward if the line is drawn from top to bottom.

5. The display control device according to claim 4, wherein the identifying unit identifies the line drawn from left to right in the input receiving area to the right of the screen display area, the line drawn from right to left in the input receiving area to the left of the screen display area, the line drawn from bottom to top in the input receiving area above the screen display area, and the line drawn from top to bottom in the input receiving area below the screen display area, and the display shift instruction unit instructs the display device to scroll to the left if the line identified by the identifying unit is drawn from left to right, to the right if the line identified by the identifying unit is drawn from right to left, downward if the line identified by the identifying unit is drawn from bottom to top, and upward if the line identified by the identifying unit is drawn from top to bottom.

6. the display control device according to claim 4 or 5, wherein the identifying unit identifies the line as either the line drawn from left to right or the line from right to left if a shift amount horizontally is more than a predetermined value, and as either the line drawn from bottom to top or the line drawn from top to bottom if the shift amount vertically is more than the predetermined value, the shift amount being a difference between a start point and an end point of the line drawn in the input receiving area.

7. The display control device according to claim 2, wherein the shape input on the right side of, left side of, above, and below the screen display area is identified by the identifying unit as a point, and the display shift instruction unit instructs the display device to shift the display screen by a predetermined amount to the left if the point identified by the identifying unit is input in the input receiving area to the right of the screen display area, to the right if the point identified by the identifying unit is input in the input receiving area to the left of the screen display area, downward if the point identified by the identifying is input in the input receiving area above the screen display area, and upward if the point identified by the identifying unit is input in the input receiving area below the screen display area.

8. The display control device according to claim 3, wherein the identifying unit further identifies, besides the line, another predetermined shape drawn in the input receiving area, and the display shift instruction unit instructs the display device to toggle between a full screen with reduced display quality and a partial screen with uncompromised display quality when the identifying unit identifies the predetermined shape.

9. A computer program that causes a computer to controls a display device capable of displaying a screen area wider than a screen display area, the computer program causing the computer to execute:
detecting an input in an input receiving area provided near the screen display area; and
instructing the display device to change the display in the screen display area based on a result of detection at the detecting.

10. The computer program according to claim 9, wherein the input receiving area is provided around the screen display area.

11. The computer program according to claim 9 or 10, wherein the detecting includes detecting a shape drawn in the input receiving area, and the instructing includes instructing the display device to change the display in the screen display area based on the shape detected at the detecting.

12. The computer program according to claim 11, wherein the detecting includes detecting as a line any line drawn from left to right, or from right to left, or from bottom to top, or from top to bottom, and the instructing includes instructing the display device to shift the display screen towards left if the line is drawn from left to right, towards right if the line is drawn from right to left, downward if the line is drawn from bottom to top, and upward if the line is drawn from top to bottom.

13. The computer program according to claim 12, wherein the detecting includes detecting the line drawn from left to right in the input receiving area to the right of the screen display area, the line drawn from right to left in the input receiving area to the left of the screen display area, the line drawn from bottom to top in the input receiving area above the screen display area, and the line drawn from top to bottom in the input receiving area below the screen display area, and the instructing includes instructing the display device to scroll to the left if the line detected at the detecting is drawn from left to right, to the right if the line detected at the detecting is drawn from right to left, downward if the line detected at the detecting is drawn from bottom to top, and upward if the line detected at the detecting is drawn from top to bottom.

14. The computer program according to claim 12 or 13, wherein the detecting includes detecting the line as either the line drawn from left to right or the line from right to left if a shift amount horizontally is more than a predetermined value, and as either the line drawn from bottom to top or the line drawn from top to bottom if the shift amount vertically is more than the predetermined value, the shift amount being a difference between a start point and an end point of the line drawn in the input receiving area.

15. The computer program according to claim 10, wherein the shape input on the right side of, left side of, above, and below the screen display area is detected at the detecting as a point, and the instructing includes instructing the display device to shift the display screen by a predetermined amount to the left if the point detected at the detecting is input in the input receiving area to the right of the screen display area, to the right if the point detected at the detecting is input in the input receiving area to the left of the screen display area, downward if the point identified by the identifying is input in the input receiving area above the screen display area, and upward if the point detected at the detecting is input in the input receiving area below the screen display area.

16. The computer program according to claim 11, wherein the detecting includes detecting, besides the line, another predetermined shape drawn in the input receiving area, and the instructing includes instructing the display device to toggle between a full screen with reduced display quality and a partial screen with uncompromised display quality when the predetermined shape is detected at the detecting.

17. A display control method of controlling a display device capable of displaying a screen area wider than a screen display area, comprising:
detecting an input in an input receiving area provided near the screen display area; and
instructing the display device to change the display in the screen display area based on a result of detection at the detecting.

18. The display control method according to claim 17, wherein the detecting includes detecting a shape drawn in the input receiving area, and the instructing includes instructing the display device to change the display in the screen display area based on the shape detected at the detecting.

19. The display control method according to claim 18, wherein the shape input on the right side of, left side of, above, and below the screen display area is detected at the detecting as a point, and the instructing includes instructing the display device to shift the display screen by a predetermined amount to the left if the point detected at the detecting is input in the input receiving area to the right of the screen display area, to the right if the point detected at the detecting is input in the input receiving area to the left of the screen display area, downward if the point identified by the identifying is input in the input receiving area above the screen display area, and upward if the point detected at the detecting is input in the input receiving area below the screen display area.

20. The display control method according to claim 18, wherein the detecting includes detecting, besides the line, another predetermined shape drawn in the input receiving area, and the instructing includes instructing the display device to toggle between a full screen with reduced display quality and a partial screen with uncompromised display quality when the predetermined shape is detected at the detecting.
